# EUROPÄISCHE PATENTSCHRIFT

(11) **EP 3 626 080 B1**
(45) Veröffentlichungstag und Bekanntmachung des Hinweises auf die Patenterteilung: **06.12.2023**
(21) Anmeldenummer: 18195152.6
(22) Anmeldetag: 18.09.2018
(51) Int. Cl.: F26B 3/12, A23C 1/12, A23C 7/02, A23C 1/04, C11D 11/00

(54) **VERFAHREN ZUR REINIGUNG DER EDUKTSEITE VON SPRÜHTROCKNUNGSANLAGEN**
METHOD FOR CLEANING THE EDUCT SIDE OF SPRAY DRYING INSTALLATIONS
PROCÉDÉ DE NETTOYAGE DU CÔTÉ ÉDUIT DES INSTALLATIONS DE SÉCHAGE PAR PULVÉRISATION

(43) Veröffentlichungstag der Anmeldung: 25.03.2020
(73) Patentinhaber: DMK Deutsches Milchkontor GmbH, 27404 Zeven (DE)
(72) Erfinder: STADLER, Christian, 27404 Zeven (DE)
(74) Vertreter: Fabry, Bernd

(56) Entgegenhaltungen:
- WO-A1-2017/221048
- WO-A2-2011/028105

## Beschreibung

### GEBIET DER ERFINDUNG

Die Erfindung befindet sich auf dem Gebiet der Verfahrenstechnik und betrifft ein Verfahren zur Reinigung des zuführenden Rohrleitungssystems von Sprühtrocknungsanlagen, speziell solchen zur Herstellung von Milchpulvern.

### HINTERGRUND DER ERFINDUNG

Die Herstellung von trockenen Pulvern aus wässrigen Lösungen oder Dispersionen erfolgt großtechnisch in der Regel durch Sprühtrocknungsverfahren. Dabei wird die wässrige Phase auf Temperaturen oberhalb von 100 °C erhitzt, am Kopf eines Reaktors ("Turm") aufgegeben und das Wasser im Gleich- oder Gegenstrom durch Heißluft verdampft und ausgetragen. Die resultierenden Turmpulver weisen typisch noch eine Restfeuchte von etwa 2 bis 5 Gew.-% auf.

Im Bereich der Milchindustrie findet die Sprühtrocknung in großem Umfang für die Herstellung von Milch- oder Molkepulvern Anwendung. Dabei wird ein Konzentrat vorgewärmt und dann in der Regel über verschiedene Einspeisungsstellen in den Turm eingedüst, wobei eine oder mehrere dieser Einspeisungsstellen aktiv sind und sich die restlichen in Wartestellung befinden. Erreicht der Druck in einem solchen Speisesystem einen Grenzwert, der in Abhängigkeit von Standzeit, Viskosität und Düsengeometrie vorgegeben wird, erfolgt ein automatischer Wechsel der Speisesysteme: das bisher produzierende System schaltet sich ab, das System in Wartestellung übernimmt dessen Aufgabe.

Dieser Vorgang ist periodisch erforderlich, da die Speisesysteme - insbesondere die das Milchkonzentrat führenden Rohrleitungen und die zugehörigen Düsen ("Lanzen") - im Laufe der Zeit durch Anbacken von Produkt verstopfen und gereinigt werden müssen.

Zu diesem Zweck sind die Rohrleitungen mit Ventilen ausgestattet, über die zum einen Wasser oder eine Reinigungsflüssigkeit und zum anderen Druckluft eingeleitet werden kann. Im Verlauf der Reinigung wird die gesamte Rohrleitung über die Düsen ausgeschoben und gelangt in eine Auffangwanne, über die die Flüssigkeit wieder abgelassen und ausgeschleust werden kann (CIP = "Cleaning In Place)". Um aber zu verhindern, dass kaum Wasser oder gar keine Reinigungsflüssigkeit in den Trockenturm gelangt, enthalten die Rohrleitungen Absperrventile. Nachdem die Rohrleitung über eine Zeit gespült worden ist, wird das zugehörige Absperrventil geschlossen und erst wieder geöffnet, wenn wieder neues Ausgangsmaterial in den Turm eingespeist werden soll.

Das Dokument WO 2011/028105 A2 offenbart eine Sprühtrocknungsvorrichtung, die mit einem steuerbaren Ventilkörper versehen ist, der insbesondere den inneren Kanal der Sprühtrocknungsvorrichtung verschließen kann. Der steuerbare Ventilkörper hat eine offene Position, in der das Produkt durch den inneren Kanal gelangen kann, und eine geschlossene Position, in der das Produkt blockiert ist, wobei zwischen Positionen gewechselt werden kann. Da ein steuerbarer Ventilkörper vorgesehen ist, kann der Bediener die Produktzufuhr durch die Sprühtrocknungsvorrichtung fernsteuern.

Problematisch ist jedoch die Reinigung der Düsen, also des Zuleitungssystems, das sich zwischen Turm und Absperrventil befindet, da der einmalige Spülvorgang für eine rückstandlose Reinigung erfahrungsgemäß nicht ausreicht. Um dies zu gewährleisten, wird über ein weiteres Ventil Druckluft eingesetzt. Auch diese Vorreinigung ist jedoch in der Regel nicht ausreichend, da häufig immer noch Produktreste in den Lanzen verbleiben. Um zu vermeiden, dass es zu Anbackungen oder Anbrennungen kommt oder verbliebe Produkttropfen in den Lanzen abbrechen und das Turmpulver kontaminieren oder gar zu glimmen beginnen und einen Brand auslösen, müssen die Lanzen daher jeweils händisch ausgebaut und separat in einer Reinigungsauffangwanne gereinigt werden.

Im Zusammenhang mit diesem Vorgehen, das in der Milchindustrie als typisch anzusehen ist, wird jedoch immer wieder eine Verkeimung der Turmpulver beim Versprühen von wässrigen Milch- oder Molkekonzentraten, die die bevorzugten Einsatzstoffe im Sinne der Erfindung darstellen, durch Enterobakterien beobachtet, die bislang nicht zugeordnet werden konnte.

### AUFGABE DER ERFINDUNG

Die Aufgabe der vorliegenden Erfindung hat daher darin bestanden, die Ursache der Verkeimung zu ermitteln und darauf aufbauend ein Verfahren für die Reinigungen der Eduktseite von Sprühtrocknungsanlagen zur Verfügung zu stellen, das eine solche Verkeimung zuverlässig verhindert.

### BESCHREIBUNG DER ERFINDUNG

Gegenstand der Erfindung ist ein Verfahren zur Reinigung der Eduktseite von Sprühtrocknungsanlagen, umfassend die folgenden Schritte
(i) Bereitstellung eines Sprühtrocknungsreaktors (R);
(ii) Bereitstellung von mindestens zwei Rohrleitungen (L1, L2) zur Einspeisung von wässrigen Ausgangsstoffen, enthaltend
   (ii-a) ein erstes Mehrwegeventil V1 zum Eindosieren einer Reinigungsflüssigkeit in das Druckluftsystem,
   (ii-b) ein zwischen dem ersten Absperrventil V1 und dem Reaktor befindliches zweites Absperrventil V2 zum Eindosieren von Druckluft, sowie
   (ii-c) entsprechend der Anzahl der Düsenlanzen angeordnete Ventile V3 zur Einbringung des Produkts in den Reaktor
   (ii-d) ein Drei-Wege-Ventil V4 zur Entwässerung des Druckluftsystems
   (ii-e) entsprechend der Anzahl der Düsenlanzen angeordnete Ventile V5 zum Ausblasen der Düsenlanzen mit Druckluft
   (ii-f) ein Absperrventil V6 nach dem Drei-Wege-Ventil zur Absperrung des Druckluftanschlusses
(iii) Bereitstellung eines Düsentisches (D) pro Rohrleitung mit mindestens einer Düse und vorzugsweise 5 bis 10 Düsen (D1 ... D10),
(iv) Bereitstellung einer Reinigungsauffangwanne R_{E},
(v) Bereitstellung einer Förderpumpe (F) pro Rohrleitung, gegebenenfalls mit einem Überdruckventil versehen,

wobei die Rohrleitungen (L) im Wechsel betrieben werden, mit dem Kopf des Reaktors (R) verbunden sind und in den Düsen (D1 ... D10) enden,
welches sich dadurch auszeichnet, dass man bei jedem Wechsel der Rohrleitungen (L) die Ventile V1 - V6 in vier Schritten in die folgenden Richtungen öffnet und schließt:

| **Schritt** | **Ventil V1** | | **Ventil V2** | | **Ventil V3** | | **Ventil V4** | | | **Ventil V5** | | **Ventil V6** | |
|---|---|---|---|---|---|---|---|---|---|---|---|---|---|
| | **R_{C}** | **R_{D}** | **R_{C}** | **R_{D}** | **R_{A}** | **R_{B}** | **R_{C}** | **R_{D}** | **R_{E}** | **R_{A}** | **R_{D}** | **R_{C}** | **R_{D}** |
| (a) | zu | zu | auf | auf | zu | zu | auf | auf | zu | auf | auf | auf | auf |
| (b) | zu | zu | zu | zu | zu | zu | zu | zu | zu | zu | zu | zu | zu |
| (c) | zu/auf | zu/auf | zu/auf | zu/auf | auf/zu | auf/zu | auf | zu | auf | zu/auf | zu/auf | zu/auf | zu/auf |
| (d) | auf | auf | auf | auf | auf | auf | auf | auf | zu | auf | auf | auf | auf |

| | | | | | | | | | | | | | |
|---|---|---|---|---|---|---|---|---|---|---|---|---|---|
| wobei gilt: R_{A} Richtung Sprühtrocknungsreaktor; R_{B} Richtung Einspeisung Ausgangsstoffe; Rc Richtung Reinigungsflüssigkeit; R_{D} Richtung Druckluft und R_{E} Richtung Reinigungsauffangwanne. | | | | | | | | | | | | | |

Die Anmelderin hat gefunden, dass die Verkeimung ihren Ursprung an den Ventilen der Druckluftleitung hat, über die die Lanzen ausgeblasen werden. Während des Produktionsprozesses sind diese Ventile naturgemäß geschlossen, während die Druckluftleitung jedoch geöffnet ist. Zeigen die Ventile jedoch Ermüdungserscheinungen und werden auch nur zu einem geringen Maße undicht, bedeutet dies, dass aufgrund des höheren Drucks in der Speiseleitung Produkt oder Umgebungsluft in die Druckluftleitung eindringt. Dies tritt insbesondere dann verstärkt auf, wenn das System nach dem Abschalten entleert wird, da auf diese Weise auch noch eine Sogwirkung durch das Ventil entsteht. Durch die Abstrahlungswärme während der Produktionsphase, die zwischen 6 und 14 Stunden beträgt, liegen in der Druckluftleitung optimale Wachstumsbedingungen für Keime vor, zumal wie oben beschrieben die Reinigung nur bis zum Druckluftventil erfolgt. Werden die Lanzen dann ausgeblasen, werden die im hohen Maße gewachsenen Enterobakterien mitausgetragen und kontaminieren das Turmpulver, wobei der Grad der Kontaminierung im Wesentlichen davon abhängt, wieviel Zeit den Bakterien zum Wachstum bleibt, bis der Ausblasvorgang erfolgt. Regelmäßig wurden Turmpulver gefunden, die eine deutliche Belastung von Enterobakterien in 10 und 1 g Pulver aufwiesen, obwohl generell keine Enterobakterien im Pulver nachgewiesen werden dürfen.

### AUSFÜHRLICHE BESCHREIBUNG DER ERFINDUNG

Das Reinigungsverfahren gliedert sich in die Schritte (a) bis (d), die nacheinander durchlaufen werden und sich durch eine konkrete Abfolge auszeichnen, mit denen die Absperrventile, bei denen es sich um Mehrwegehähne bzw. -ventile handelt, geöffnet und geschlossen werden, wie dies in der obigen Tabelle vorgegeben wird. Dies wird nachfolgend näher erläutert.

Im **Schritt (a "Ausblasen")** ist das Ventil V1 in Richtung B (Einspeisestelle) geschlossen, da diese Rohrleitung ja gerade aus der Produktion genommen worden ist. Was bedeutet, dass die Leitung bis zur Einspeisestelle bereits mit Wasser ausgeschoben wurde. Um die erste Phase der Reinigung zu starten, werden die Ventile V3 in Richtung Reaktor geschlossen. Das Drei-Wege-Ventil V4 in Richtung des Reinigungssystems ist bereits geschlossen. Durch das Öffnen der Ventile V2, V5 sowie V6 in Richtung des Einspeisesystem des Reaktors wird das in der Leitung noch befindliche Produkt in Richtung des Reaktors befördert und schließlich über die Düsen/Lanzen ausschoben.

Nachdem der Spülvorgang abgeschlossen ist, werden im **Schritt (b "CIP-Vorbereitung")** alle Ventil V1 - V6 geschlossen. Anschließend müssen die Düsenlanzen manuell durch einen Bediener in eine der neben des Reaktors befindlichen Reinigungskammer W eingesetzt werden.

Um die Düsen zu reinigen werden im **Schritt (c "CIP-Läuft")** die Ventile V3 in Richtung der Einspeisung in den Reaktor geöffnet. In regelmäßigen Abständen werden die Ventile V3 geschlossen und dabei das Ventil V1 sowie die Ventile V5 und V2 taktweise geöffnet um einen gleichmäßig starken Durchfluss und Druck aufrecht zu erhalten. Das Ventil V4 ist dabei in Richtung Druckluft geschlossen, jedoch in Richtung Reinigungssystem geöffnet. Das Ventil V6 ist während des gesamten Schritt (c) geschlossen.

Im letzten **Schritt (d "Entwässern")** wird Ventil V4 in Richtung der Reinigungsauffangwanne W geschlossen. Die gesamte Einspeisungsleitung vom Einspeisesystem bis zu den Förderpumpen wird durch Öffnen der dort befindlichen Ventilen entwässert. Die Ventile V1 in Richtung Einspeisung, V2 in Richtung Druckluftsystem, V3 in Richtung Einspeisung (jedoch in die Reinigungskammer eingebauten Düsenlanzen) sowie V5 in Richtung Einspeisung (Düsenlanzen eingebaut in Reinigungskammer) wahlweise dauerhaft geöffnet bzw. taktweise geöffnet werden sobald das Ventil V6 geöffnet wird. Durch das Öffnen des Ventils 6 beginnt der Schritt "Entwässern". Das sich ansammelnde Wasser aus der Einspeisungsleitung kann zum einen beispielsweise über ein Überdruckventil, das sich an der Förderpumpe befindet und zum Anderen über die Reinigungskammer entweichen. Als Dauer des Ausblasens wird eine Zeit größer 60s vorgeschlagen um das in der Leitung befindliche Wasser vollständig auszublasen. Nach Ablauf der Zeit werden die Ventile V1, V2 sowie V5 geschlossen. Dabei bleibt das Ventil V4 in Richtung der Reinigungsauffangwanne W weiterhin geschlossen. Somit steht die Druckluft im Bereich von 10 bis 80 bar und vorzugsweise etwa 60 bar bis zu Ventil V2 des Druckluftsystems an.

Auf diese Weise wird zum einen verhindert, dass Umgebungsluft eindringen kann und es wird zum anderen sichergestellt, dass kein Restwasser in der Druckluftleitung verbleibt. Dadurch wird eine Dekontamination durch Umgebungsluft, kontaminiertes Restwasser oder einer Kombination von beidem zuverlässig entgegengewirkt.

Ebenfalls wäre es möglich das Ventil V2 geöffnet zu lassen, so dass die Druckluft im Bereich von 10 bis 80 bar und vorzugsweise etwa 60 bar bis zu den Ventilen V1 und V5 des Druckluftsystems ansteht. Hierbei könnte auch sichergestellt werden, dass bei möglichen Ermüdungserscheinungen der Ventile V5 sowie V1 die dabei entstandener Undichtigkeiten durch anstehende Druckluft kompensiert wird.

Als zusätzliche Maßnahme kann es wünschenswert sein, in die Druckluftleitung, die zu den Lanzen führt, eine inline-Druckmessung zu integrieren. Damit kann man überprüfen, ob die Druckluftlanzenventile (V5) auch wirklich dicht sind, da andernfalls im Produktionsbetrieb wieder Produkt aus der Produktleitung (ca. 240 bar) in die Druckluftleitung (ca. 10 bis 80 und vorzugsweise etwa 60 bar) gepresst wird.

Als weiteren (Zwischen-)Schritt hat es sich als vorteilhaft erwiesen, nach dem Spülvorgang eine Temperaturbehandlung des gesamten Systems ("Dämpfung") vorzunehmen. Dazu empfiehlt es sich, einen Anschluss für Heißdampf beispielsweise an die Druckluftleitung vorzunehmen und dies gegebenenfalls mit einer Temperaturmessung an der Einspeisungsstelle zu versehen. So könnte man die zu erreichende Soll-Temperatur über die Zeit regeln. Das Kondensat könnte über die Lanzen und die darunter befindliche Auffangwanne oder durch einen separaten Auslass in der Rohrleitung entwässern.

Die anschließend erhaltenen Turmpulver waren ausnahmslos praktisch keimfrei, d.h. die Belastung an Enterobakterien war in 10 und 1g Pulver jeweils negativ.

### GEWERBLICHE ANWENDBARKEIT

Ein weiterer Gegenstand der Erfindung betrifft eine Sprühtrocknungsanlage zur Herstellung von trockenen Pulvern aus wässrigen Milch- oder Molkekonzentraten, umfassend die folgenden Bauteile:
(i) ein Sprühtrocknungsreaktor (R);
(ii) mindestens zwei Rohrleitungen (L) zur Einspeisung von wässrigen Ausgangsstoffen, enthaltend
   (ii-a) ein erstes Mehrwegeventil V1 zum Eindosieren einer Reinigungsflüssigkeit in das Druckluftsystem,
   (ii-b) ein zwischen dem ersten Absperrventil V1 und dem Reaktor befindliches zweites Absperrventil V2 zum Eindosieren von Druckluft, sowie
   (ii-c) entsprechend der Anzahl der Düsenlanzen angeordnete Ventile V3 zur Einbringung des Produkts in den Reaktor
   (ii-d) ein Drei-Wege-Ventil V4 zur Entwässerung des Druckluftsystems
   (ii-e) entsprechend der Anzahl der Düsenlanzen angeordnete Ventile V5 zum Ausblasen der Düsenlanzen mit Druckluft
   (ii-f) ein Absperrventil V6 nach dem Drei-Wege-Ventil zur Absperrung des Druckluftanschlusses
(iii) pro Rohrleitung ein Düsentisch (D) mit mindestens einer Düse D1 bis Dx,
(iv) pro Rohrleitung eine Förderpumpe (F), gegebenenfalls mit einem Überdruckventil versehen,
(v) eine Auffangwanne (W)
wobei die Rohrleitungen (L) zum einen mit dem Kopf des Reaktors (R) verbunden sind und in den Düsen (D1 ... Dx) enden und zum anderen über die Förderpumpe (F) mit den Ausgangsstoffen beschickt werden und die Auffangwanne (W) unterhalb des Düsentischs (D) angeordnet und mit einer Auslassvorrichtung (Z) versehen ist.

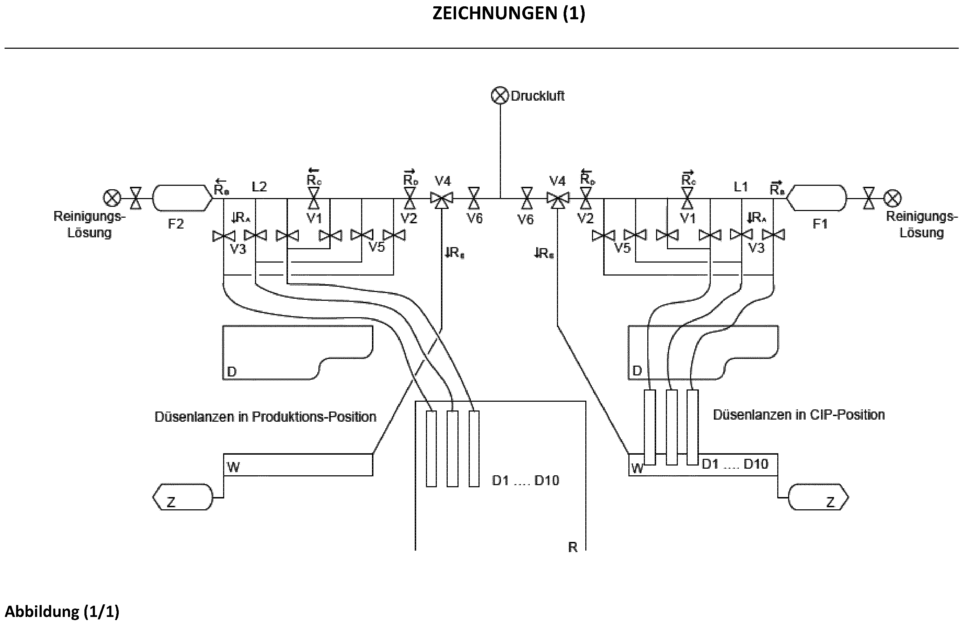

Die Erfindung wird nachfolgend durch die **Abbildung 1** näher erläutert, ohne darauf jedoch eingeschränkt zu sein.

### Erläuterung der Bezugszeichen:

- R: Reaktor
- L1, L2: Rohrleitungen
- V1, V2: Absperrventile
- D1 ... D10: Düsen (auch als Lanzen bezeichnet)
- F1, F2: Förderpumpen
- D: Düsentisch
- W: Auffangwanne
- Z: Ablassvorrichtung bzw. Reinigungsrücklauf

## Patentansprüche

1. Verfahren zur Reinigung von Sprühtrocknungsanlagen, umfassend die folgenden Schritte
(i) Bereitstellung eines Sprühtrocknungsreaktors (R);
(ii) Bereitstellung von mindestens zwei Rohrleitungen (L1, L2) zur Einspeisung von wässrigen Ausgangsstoffen, enthaltend
(ii-a) ein erstes Mehrwegeventil V1 zum Eindosieren einer Reinigungsflüssigkeit,
(ii-b) ein zwischen dem ersten Absperrventil V1 und dem Reaktor befindliches zweites Absperrventil V2 zum Eindosieren von Druckluft, sowie
(ii-c) entsprechend der Anzahl der Düsenlanzen angeordnete Ventile V3 zur Einbringung des Produkts in den Reaktor
(ii-d) ein Drei-Wege-Ventil V4 zur Entwässerung des Druckluftsystems
(ii-e) entsprechend der Anzahl der Düsenlanzen angeordnete Ventile V5 zum Ausblasen der Düsenlanzen mit Druckluft
(ii-f) ein Absperrventil V6 nach dem Drei-Wege-Ventil zur Absperrung des Druckluftanschlusses
(iii) Bereitstellung eines Düsentisches (D) pro Rohrleitung mit mindestens einer Düse und vorzugsweise 5 bis 10 Düsen (D1 ... D10),
(iv) Bereitstellung einer Reinigungsauffangwanne R_{E},
(v) Bereitstellung einer Förderpumpe (F) pro Rohrleitung, gegebenenfalls mit einem Überdruckventil versehen,
wobei die Rohrleitungen (L) im Wechsel betrieben werden, mit dem Kopf des Reaktors (R) verbunden sind und in den Düsen (D1 ... D10) enden,
**dadurch gekennzeichnet, dass** man bei jedem Wechsel der Rohrleitungen (L) die Absperrventile V1 - V6 in vier Schritten in die folgenden Richtungen öffnet und schließt:
| **Schritt** | **Ventil V1** | | **Ventil V2** | | **Ventil V3** | | **Ventil V4** | | | **Ventil V5** | | **Ventil V6** | |
|---|---|---|---|---|---|---|---|---|---|---|---|---|---|
| | **R_{C}** | **R_{D}** | **R_{C}** | **R_{D}** | **R_{A}** | **R_{B}** | **R_{C}** | **R_{D}** | **R_{E}** | **R_{A}** | **R_{D}** | **R_{C}** | **R_{D}** |
| (a) | zu | zu | auf | auf | zu | zu | auf | auf | zu | auf | auf | auf | auf |
| (b) | zu | zu | zu | zu | zu | zu | zu | zu | zu | zu | zu | zu | zu |
| (c) | zu/auf | zu/auf | zu/auf | zu/auf | auf/zu | auf/zu | auf | zu | auf | zu/auf | zu/auf | zu/auf | zu/auf |
| (d) | auf | auf | auf | auf | auf | auf | auf | auf | zu | auf | auf | auf | auf |
| | | | | | | | | | | | | | |
|---|---|---|---|---|---|---|---|---|---|---|---|---|---|
| wobei gilt: R_{A} Richtung Sprühtrocknungsreaktor; R_{B} Richtung Einspeisung Ausgangsstoffe; Rc Richtung Reinigungsflüssigkeit; R_{D} Richtung Druckluft und R_{E} Richtung Reinigungsauffangwanne. | | | | | | | | | | | | | |

2. Verfahren nach Anspruch 1, **dadurch gekennzeichnet, dass** man als wässrige Ausgangsstoffe Milch- oder Molkekonzentrate einsetzt.

3. Verfahren nach den Ansprüchen 1 und/oder 2, **dadurch gekennzeichnet, dass** der Reaktor mit drei Rohrleitungen zur Einspeisung von wässrigen Ausgangsstoffen verbunden ist.

4. Verfahren nach mindestens einem der Ansprüche 1 bis 3, **dadurch gekennzeichnet, dass** man als Absperrventile Mehrwegehähne bzw. -ventile einsetzt.

5. Verfahren nach mindestens einem der Ansprüche 1 bis 4, **dadurch gekennzeichnet, dass** man als Reinigungsflüssigkeit Wasser einsetzt.

6. Verfahren nach mindestens einem der Ansprüche 1 bis 5, **dadurch gekennzeichnet, dass** man die Produktreste in der zu reinigenden Rohrleitung über die Düsen ausdrückt und in einer darunter befindlichen Wanne auffängt, über die diese dann abgelassen werden können.

7. Verfahren nach mindestens einem der Ansprüche 1 bis 6, **dadurch gekennzeichnet, dass** der Reaktor einen Düsentisch enthält, der 5 bis 10 Düsen aufweist.

8. Verfahren nach mindestens einem der Ansprüche 1 bis 7, **dadurch gekennzeichnet, dass** man die Druckluft mit etwa 10 bis etwa 80 bar einsetzt.

9. Verfahren nach mindestens einem der Ansprüche 1 bis 8, **dadurch gekennzeichnet, dass** nach Beendigung des Reinigungsschrittes (d) in dem Rohrleitungsabschnitt zwischen den beiden Ventilen V1 und V2 ein Druck von etwa 10 bis etwa 80 bar anliegt.

10. Verfahren nach mindestens einem der Ansprüche 1 bis 9, **dadurch gekennzeichnet, dass** man die Rohrleitungen nach dem Spülvorgang und vor dem Ausblasen einer Temperaturbehandlung unterwirft.

11. Verfahren nach Anspruch 10, **dadurch gekennzeichnet, dass** man die Temperaturbehandlung mit Heißdampf durchführt.

12. Verfahren nach mindestens einem der Ansprüche 1 bis 11, **dadurch gekennzeichnet, dass** man die Dichtigkeit der Ventile durch eine inline-Druckmessung überwacht.

13. Sprühtrocknungsanlage zur Herstellung von trockenen Pulvern aus wässrigen Milch- oder Molkekonzentraten, umfassend die folgenden Bauteile:
(i) ein Sprühtrocknungsreaktor (R);
(ii) mindestens zwei Rohrleitungen (L) zur Einspeisung von wässrigen Ausgangsstoffen, enthaltend
(ii-a) ein erstes Absperrventil V1 zum Eindosieren einer Reinigungsflüssigkeit,
(ii-b) ein zwischen dem ersten Absperrventil V1 und dem Reaktor befindliches zweites Absperrventil V2 zum Eindosieren von Druckluft,
(ii-c) entsprechend der Anzahl der Düsenlanzen angeordnete Ventile V3 zur Einbringung des Produkts in den Reaktor
(ii-d) ein Drei-Wege-Ventil V4 zur Entwässerung des Druckluftsystems
(ii-e) entsprechend der Anzahl der Düsenlanzen angeordnete Ventile V5 zum Ausblasen der Düsenlanzen mit Druckluft
(ii-f) ein Absperrventil V6 nach dem Drei-Wege-Ventil zur Absperrung des Druckluftanschlusses
(iii) pro Rohrleitung ein Düsentisch (D) mit mindestens einer Düse D1 bis Dx,
(iv) pro Rohrleitung eine Förderpumpe (F), gegebenenfalls mit einem Überdruckventil versehen, sowie
(v) eine Auffangwanne (W)
wobei die Rohrleitungen (L) zum einen mit dem Kopf des Reaktors (R) verbunden sind und in den Düsen (D1 ... Dx) enden und zum anderen über die Förderpumpe (F) mit den Ausgangsstoffen beschickt werden und die Auffangwanne (W) unterhalb des Düsentischs (D) angeordnet und mit einer Auslassvorrichtung (Z) versehen ist.

## Claims

1. Method for cleaning spray drying systems, comprising the following steps
(i) providing a spray drying reactor (R);
(ii) providing of at least two pipelines (L1, L2) for feeding aqueous starting materials, containing
(ii-a) a first multi-way valve V1 for metering in a cleaning liquid,
(ii-b) a second shut-off valve V2 located between the first shut-off valve V1 and the reactor for metering in compressed air, and
(ii-c) valves V3 arranged according to the number of nozzle lances for introducing the product into the reactor
(ii-d) a three-way valve V4 for draining the compressed air system
(ii-e) valves V5 arranged according to the number of nozzle lances for blowing out the nozzle lances with compressed air
(ii-f) a shut-off valve V6 after the three-way valve to shut off the compressed air connection
(iii) providing a nozzle table (D) per pipeline with at least one nozzle and preferably 5 to 10 nozzles (D1 ... D10),
(iv) providing of a cleaning collecting tray R_{E},
(v) providing a feed pump (F) per pipeline, optionally provided with a pressure relief valve, and
whereby the pipes (L) are operated alternately, are connected to the head of the reactor (R) and end in the nozzles (D1 ... D10),
**characterized in that** each change of the pipelines (L), the shut-off valves V1-V6 are opened and closed in four steps in the following directions:
| **Step** | **Valve V1** | | **Valve V2** | | **Valve V3** | | **Valve V4** | | | **Valve V5** | | **Valve V6** | |
|---|---|---|---|---|---|---|---|---|---|---|---|---|---|
| | **R_{C}** | **R_{D}** | **R_{C}** | **R_{D}** | **R_{A}** | **R_{B}** | **R_{C}** | **R_{D}** | **R_{E}** | **R_{A}** | **R_{D}** | **R_{C}** | **R_{D}** |
| (a) | ZU | zu | auf | auf | zu | zu | auf | auf | zu | auf | auf | auf | auf |
| (b) | zu | zu | zu | zu | zu | zu | zu | zu | zu | zu | zu | zu | zu |
| (c) | zu/auf | zu/auf | zu/auf | zu/auf | auf/zu | auf/zu | auf | zu | auf | zu/auf | zu/auf | zu/auf | zu/auf |
| (d) | auf | auf | auf | auf | auf | auf | auf | auf | zu | auf | auf | auf | auf |
| | | | | | | | | | | | | | |
|---|---|---|---|---|---|---|---|---|---|---|---|---|---|
| wherein: R_{A} direction spray drying reactor; R_{B} direction starting materials; R_{C} direction cleaning liquid; R_{D} direction compressed air and R_{E} direction cleaning collecting tray. | | | | | | | | | | | | | |

2. Process according to claim 1, **characterized in that** milk or whey concentrates are used as the aqueous starting materials.

3. Process according to claims 1 and/or 2, **characterized in that** the reactor is connected to three pipelines for feeding aqueous starting materials.

4. Process according to at least one of claims 1 to 3, **characterized in that** multi-way taps or valves are used as shut-off valves.

5. Process according to at least one of claims 1 to 4, **characterized in that** water is used as the cleaning liquid.

6. Process according to at least one of claims 1 to 5, **characterized in that** the product residues in the pipeline to be cleaned are pressed out via the nozzles and collected in a tray located below, via which they can then be drained off.

7. Process according to at least one of claims 1 to 6, **characterized in that** the reactor contains a nozzle table which has 5 to 10 nozzles.

8. Process according to at least one of claims 1 to 7, **characterized in that** the compressed air is used at about 10 to about 80 bar.

9. Process according to at least one of claims 1 to 8, **characterized in that,** after completion of the cleaning step (d), a pressure of about 10 to about 80 bar is present in the pipeline section between the two valves V1 and V2.

10. Process according to at least one of claims 1 to 9, **characterised in that** the pipelines are subjected to a temperature treatment after the flushing process and before the blow-out.

11. Process according to claim 10, **characterized in that** the temperature treatment is carried out with superheated steam.

12. Process according to at least one of claims 1 to 11, **characterized in that** the tightness of the valves is monitored by an inline pressure measurement.

13. A spray drying system for producing dry powders from aqueous milk or whey concentrates comprising the following components:
(i) a spray-drying reactor (R);
(ii) at least two pipelines (L) for feeding aqueous starting materials, containing
(ii-a) a first shut-off valve V1 for metering in a cleaning liquid,
(ii-b) a second shut-off valve V2, located between the first shut-off valve V1 and the reactor, for metering in compressed air,
(ii-c) valves V3, arranged according to the number of nozzle lances, for introducing the product into the reactor
(ii-d) a three-way valve V4 for draining the compressed air system
(ii-e) valves V5, arranged according to the number of nozzle lances, for blowing out the nozzle lances with compressed air
(ii-f) a shut-off valve V6 downstream of the three-way valve for shutting off the compressed air connection
(iii) one nozzle table (D) per pipeline with at least one nozzle D1 to Dx,
(iv) one feed pump (F) per pipeline, if necessary provided with a pressure relief valve, and
(v) a collecting trough (W)
the pipelines (L) being connected, on the one hand, to the head of the reactor (R) and ending in the nozzles (D1 ... Dx) and, on the other hand, being fed with the starting materials via the feed pump (F), and the collecting trough (W) being arranged below the nozzle table (D) and being provided with an outlet device (Z).

## Revendications

1. Procédé de nettoyage d'installations de séchage par pulvérisation, ledit procédé comprenant les étapes suivantes
(i) fournir un réacteur de séchage par pulvérisation (R) ;
(ii) fournir au moins deux conduites tubulaires (L1, L2) destinées à l'alimentation en matières premières aqueuses, lesquelles contiennent
(ii-a) une première vanne multivoie V1 destinée à introduire un liquide de nettoyage de manière dosée,
(ii-b) une deuxième vanne d'arrêt V2 située entre la première vanne d'arrêt V1 et le réacteur et destinée à introduire de l'air comprimé de manière dosée, et
(ii-c) des vannes V3 disposées en fonction du nombre de lances et destinées à introduire du produit dans le réacteur,
(ii-d) une vanne à trois voies V4 destinée à purger le système d'air comprimé
(ii-e) des vannes V5 disposées en fonction du nombre de lances à buses et destinées à purger les lances à buses par soufflage d'air comprimé
(ii-f) une vanne d'arrêt V6 placée en aval de la vanne à trois voies et destinée à fermer le raccord d'air comprimé,
(iii) fournir une table à buses (D) par conduite tubulaire, laquelle comprend au moins une buse et de préférence 5 à 10 buses (D1...D10),
(iv) fournir un bac collecteur de nettoyage R_{E},
(v) fournir une pompe d'alimentation (F) par conduite tubulaire, éventuellement munie d'une vanne de surpression,
les conduites tubulaires (L) étant actionnées de manière alternée, étant reliées à la tête du réacteur (R) et aboutissant aux buses (D1...D10),
**caractérisé en ce qu'**à chaque changement de conduites tubulaires (L), les vannes d'arrêt V1- V6 sont ouvertes et fermées en quatre étapes dans les sens suivants :
| **Étape** | **Vanne V1** | | **Vanne V2** | | **Vanne V3** | | **Vanne V4** | | | **Vanne V5** | | **Soupape V6** | |
|---|---|---|---|---|---|---|---|---|---|---|---|---|---|
| | **R_{C}** | **R_{D}** | **R_{C}** | **R_{D}** | **R_{A}** | **R_{B}** | **R_{C}** | **R_{D}** | **R_{E}** | **R_{A}** | **R_{D}** | **R_{C}** | **R_{D}** |
| (a) | F | F | O | O | F | F | O | O | F | O | O | O | O |
| (b) | F | F | F | F | F | F | F | F | F | F | F | F | F |
| (c) | F/O | F/O | F/O | F/O | O/F | O/F | O | F | O | F/O | F/O | F/O | F/O |
| (d) | O | O | O | O | O | O | O | O | F | O | O | O | O |
| | | | | | | | | | | | | | |
|---|---|---|---|---|---|---|---|---|---|---|---|---|---|
| R_{A} en direction du réacteur de séchage par pulvérisation ; R_{B} en direction de l'alimentation en matières premières ; R_{C} en direction du liquide de nettoyage ; R_{D} en direction de l'air comprimé et R_{E} en direction du bac collecteur de nettoyage. | | | | | | | | | | | | | |

2. Procédé selon la revendication 1, **caractérisé en ce que** des concentrés de lait ou de lactosérum sont utilisés comme matières premières aqueuses.

3. Procédé selon les revendications 1 et/ou 2, **caractérisé en ce que** le réacteur est relié à trois conduites tubulaires destinées à l'alimentation en matières premières aqueuses.

4. Procédé selon l'une au moins des revendications 1 à 3, **caractérisé en ce que** des robinets ou des vannes multivoies sont utilisés comme vannes d'arrêt.

5. Procédé selon l'une au moins des revendications 1 à 4, **caractérisé en ce que** de l'eau est utilisée comme liquide de nettoyage.

6. Procédé selon l'une au moins des revendications 1 à 5, **caractérisé en ce que** les résidus de produit dans la conduite tubulaire à nettoyer sont éjectés par le biais des buses et collectés dans un bac situé au-dessous qui permet de les évacuer par la suite.

7. Procédé selon l'une au moins des revendications 1 à 6, **caractérisé en ce que** le réacteur contient une table à buses qui comporte 5 à 10 buses.

8. Procédé selon l'une au moins des revendications 1 à 7, **caractérisé en ce que** l'air comprimé est utilisé entre environ 10 et environ 80 bars.

9. Procédé selon l'une au moins des revendications 1 à 8, **caractérisé en ce que**, une fois l'étape de nettoyage (d) terminée, une pression d'environ 10 à environ 80 bars est appliquée dans la portion de conduite tubulaire située entre les deux vannes V1 et V2.

10. Procédé selon l'une au moins des revendications 1 à 9, **caractérisé en ce que** les conduites tubulaires sont soumises à un traitement thermique après le processus de rinçage et avant la purge par soufflage.

11. Procédé selon la revendication 10, **caractérisé en ce que** le traitement thermique est effectué avec de la vapeur surchauffée.

12. Procédé selon l'une au moins des revendications 1 à 11, **caractérisé en ce que** l'étanchéité des vannes est surveillée par une mesure de pression en ligne.

13. Installation de séchage par pulvérisation destinée à la production de poudres sèches à partir de concentrés aqueux de lait ou de lactosérum, ladite installation comprenant les composants suivants :
(i) un réacteur de séchage par pulvérisation (R) ;
(ii) au moins deux conduites tubulaires (L) destinées à l'alimentation en matières premières aqueuses, lesquelles contiennent
(ii-a) une première vanne multivoie V1 destinée à introduire un liquide de nettoyage de manière dosée,
(ii-b) une deuxième vanne d'arrêt V2 située entre la première vanne d'arrêt V1 et le réacteur et destinée à introduire de l'air comprimé de manière dosée, et
(ii-c) des vannes V3 disposées en fonction du nombre de lances et destinées à introduire du produit dans le réacteur,
(ii-d) une vanne à trois voies V4 destinée à purger le système d'air comprimé,
(ii-e) des vannes V5 disposées en fonction du nombre de lances à buses et destinées à purger les lances à buses par soufflage d'air comprimé,
(ii-f) une vanne d'arrêt V6 placée en aval de la vanne à trois voies et destinée à fermer le raccord d'air comprimé,
(iii) une table à buses (D) par conduite tubulaire, laquelle table comprend au moins une buse D1 à Dx,
(iv) une pompe d'alimentation (F) par conduite tubulaire, éventuellement munie d'une vanne de surpression,
(v) un bac collecteur de nettoyage W,
les conduites tubulaires (L) étant d'une part reliées à la tête du réacteur (R) et aboutissant aux buses (DI...Dx) et d'autre part étant alimentées en matières premières par le biais de la pompe d'alimentation (F) et le bac collecteur (W) étant disposé au-dessous de la table à buses (D) et étant pourvu d'un dispositif de sortie (Z).
